# EUROPÄISCHE PATENTSCHRIFT

(11) **EP 1 135 645 B1**
(45) Veröffentlichungstag und Bekanntmachung des Hinweises auf die Patenterteilung: **11.01.2006**
(21) Anmeldenummer: 00969379.7
(22) Anmeldetag: 02.10.2000
(51) Int. Cl.: F16N 11/08, F16N 29/02

(54) **VORRICHTUNG ZUR SCHMIERUNG EINES WÄLZLAGERS**
DEVICE FOR LUBRICATING A ROLLING BEARING
DISPOSITIF POUR LUBRIFIER UN PALIER A ROULEMENT

(30) Priorität: 02.10.1999 DE 19947458
(43) Veröffentlichungstag der Anmeldung: 26.09.2001
(73) Patentinhaber: Perma-Tec GmbH & Co. KG, 97717 Euerdorf (DE)
(72) Erfinder: GRAF, Walter, 97717 Euerdorf (DE); MAY, Anton, 97705 Burkhardroth (DE); ALBERT, Ralf, 97424 Schweinfurt (DE); FENN, Peter, 97490 Poppenhausen (DE); BRAND, Armin, D-97688 Bad Kissingen (DE)
(74) Vertreter: Albrecht, Rainer Harald
(86) Internationale Anmeldenummer: PCT/EP2000/009632
(87) Internationale Veröffentlichungsnummer: WO 2001/025678

(56) Entgegenhaltungen:
- EP-A- 0 247 398
- EP-A- 0 288 941
- EP-A- 0 704 654
- EP-A- 0 931 974
- EP-A- 0 933 581
- DE-U- 29 715 808
- US-A- 5 634 531

## Beschreibung

Die Erfindung betrifft eine Vorrichtung zur Schmierung eines Wälzlagers. bestehend.

Es sind Schmierstoffspender bekannt, die selbsttätig über einen vorgegebenen, einstellbaren Zeitraum von zum Beispiel 1 bis 12 Monaten Schmierstoff abgeben. Präzise Dosierungen sind insbesondere möglich mit Schmierstoffgebern, die einen Schmierstoffbehälter mit Schmierstoffvorrat, eine Austragseinrichtung mit einem elektromotorischen Antrieb und eine Steuereinrichtung für den Elektromotor aufweisen. Ein solcher Schmierstoffgeber ist beispielsweise aus DE-A 44 22 407 bekannt.

Es sind ferner Zustandsüberwachungssysteme für eine Online-Wälzlagerüberwachung bekannt, mit denen Wälzlagerzustände während des Maschinenbetriebs gemessen und ausgewertet werden. Anhand von Trendbetrachtungen der Wälziagerzustände können Instandhaltungsaufgaben frühzeitig geplant und effektiver durchgeführt werden. Die Messeinrichtung eines aus der Praxis bekannten Zustandsüberwachungssystems weist mehrere Messkanäle für Messwertaufnehmer auf und ist mit einem Rechner verbunden, in dem mit entsprechender Software die Messwerte ausgewertet und Wälzlagerzustände angezeigt werden. Zustandsüberwachungssysteme dieser Art sind aufwändig. Die Ergebnisse der Analysen müssen regelmäßig betrachtet werden. Für den Umgang mit der Software ist geschultes Personal erforderlich.

Bei einem beginnenden Wälzlagerschaden, der durch Inspektionen oder mit Hilfe eines zuvor beschriebenen Zustandsüberwachungssystems festgestellt wird, wird das Wälzlager sofort oder im Rahmen der Instandhaltungsmaßnahmen zu einem geplanten nahen Zeitpunkt ausgetauscht. Auf die Einstellung des Schmierstoffgebers hat dies keinen Einfluss.

Aus EP-A 0 288 941 ist eine Vorrichtung zur Schmierung eines Wälzlagers bekannt, die einen Schmierstoffgeber sowie eine an dem Wälzlager zugeordnete Messeinrichtung aufweist. Zum Schmierstoffgeber gehören eine Austragseinrichtung mit elektromotorischem Antrieb sowie eine Steuereinrichtung für den elektromotorischen Antrieb. Die dem zu schmierenden Wälzlager zugeordnete Messeinrichtung ist mit der Steuereinrichtung des Schmierstoffgebers verbunden. Mittels der Messeinrichtung wird die Drehgeschwindigkeit eines die Wälzkörper haltenden Lagerkäfigs vorzugsweise optisch detektiert und die Drehgeschwindigkeit der in dem Wälzlager liegenden Welle aufgenommen. Die Signale werden digitalisiert und miteinander verglichen. Bei einem bestimmten Verhältnis der Drehgeschwindigkeiten wird von der Steuereinrichtung ein Schmierimpuls an den Schmierstoffgeber geleitet, der daraufhin eine kleine Schmierstoffmenge abgibt. Der Schmierstoffgeber wird durch die Messvorrichtung bedarfsabhängig geschaltet.

Der Erfindung liegt die Aufgabe zu Grunde, eine Vorrichtung zur Schmierung eines Wälzlagers anzugeben, die ohne Anschluss an ein zentrales Wälzlagerüberwachungssystem eine zustandsorientierte Instandhaltung ermöglicht. Die Vorrichtung soll zu diesem Zweck einen beginnenden Lagerdefekt oder ein Mangelschmierungszustand erkennen und durch geeignete Zusatzschmierungen des Schadensverlauf verzögern, so dass der Lagerwechsel im Rahmen langfristig geplanter Instandhaltungsarbeiten durchgeführt werden kann.

Gegenstand der Erfindung und Lösung dieser Aufgabe ist eine Vorrichtung zur Schmierung eines Wälzlagers bestehend aus
1.1) einem Schmierstoffgeber, der einen Schmierstoffbehälter mit Schmierstoffvorrate, eine Austragseinrichtung mit elektromotorischem Antrieb sowie eine Steuereinrichtung für den elektromotorischen Antrieb aufweist und an die Schmierstelle eine Wälzlagers angeschlossen ist, und
1.2) einer dem Wälzlager zugeordneten Messeinrichtung zur Erfassung des Lagerzustandes, die mit der Steuereinrichtung des Schmierstoffgebers verbunden ist,

wobei die Steuereinrichtung des Schmierstoffgebers in vorgegebenen Intervallen Schaltimpulse an den elektromotorischen Antrieb zur Abgabe einer kleinen Schmierstoffmenge abgibt, wobei die Messeinrichtung einen Stoßimpulsaufnehmer in Verbindung mit einem Sensor zur Messung der Wellendrehzahl aufweist und wobei die Steuereinrichtung die Schmierstoffabgaberate durch Änderung der vorgegebenen Spendezeitpunkte oder der Dauer der Spendeintervalle selbsttätig verändert sowie ein Signal zur Abgabe eines beginnenden Lagerdefektes oder eines Mangelschmierungszustandes abgibt, wenn das von der Messeinrichtung abgegebene Messsignal einen Vorgabewert überschreitet.

Der Lagerzustand des Wälzlagers wird messtechnisch erfasst. Das Messsignal wird der Steuereinrichtung des Schmierstoffgebers zugeführt und von dieser ausgewertet. Die Steuereinrichtung verändert die Schmierstoffabgaberate durch Änderung der Spendezeitpunkte und/oder der Dauer der Spendeintervalle selbsttätig und gibt ein Signal zur Anzeige eines beginnenden Lagerdefektes oder einen Mangelschmierungszustand ab, wenn das Messsignal einen Vorgabewert, der für einen beginnenden Lagerschaden bzw. einen Mangelschmierungszustand charakteristisch ist, überschreitet. Erfindungsgemäß wird die Schmierstoffabgaberate automatisch erhöht, sobald die Messeinrichtung einen beginnendne Lagerschaden oder ienen Mangelschmierungszustand detektiert. Die Menge der geeigneten Zusatzschmierung ist durch orientierende Versuche festlegbar. Die Zusatzschmierung kann über einen längeren Zeitraum konstant beibehalten oder nach einem durch die Steuereinrichtung des Schmierstoffgebers vorgegebenen Zeitprofil geändert werden.

Die Messeinrichtung weist einen Stoßimpulsaufnehmer und einen Sensor zur Messung der Wellendrehzahlen auf. Die Stoßimpulsmessung in Kombination mit Informationen über die Wellendrehzahl ermöglicht eine zuverlässige Überwachung des Wälzlagers. Sie ist technisch einfach realisierbar.

Vorzugsweise weist die Messeinrichtung zusätzlich einen Temperatursensor auf.

Gemäß einer weiteren vorteilhaften Ausgestaltung der erfindungsgemäßen Vorrichtung weist die Steuereinrichtung Einstellmittel oder eine Schnittstelle für eine Wälzlager spezifische Konfiguration eines in der Steuereinrichtung gespeicherten Steuerprogramms auf, welches die Lagerzustandsüberwachung und/oder die Festlegung der Spendezeitpunkte oder Spendeintervalle bei festgestelltem Wälzlagerdefekt bzw. festgestelltem Mangelschmierungszustand betrifft. Die Konfiguration kann werksseitig oder bei Inbetriebnahme der Vorrichtung mittels eines PC's erfolgen, der mit einem Anschluss der Vorrichtung verbunden und nach erfolgter Konfiguration wieder von der Vorrichtung getrennt wird. Im Rahmen der Erfindung liegt es auch, dass die Steuereinrichtung mit Vorwahlschaltern zur Eingabe Wälzlager spezifischer Daten ausgerüstet ist.

Der Schmierstoffgeber weist ein Gehäuse auf, das zweckmäßig mit einer Anzeigeeinrichtung, zum Beispiel mit einer farbigen Leuchtdiode (LED), für das ein Lagerdefekt anzeigende Signal ausgerüstet ist. Die Steuereinrichtung kann ferner eine Schnittstelle für eine Signalfernübertragung aufweisen. Die Signalfernübertragung kann leitergebunden oder drahtlos erfolgen.

Schreitet ein detektierter Lagerschaden trotz der erfindungsgemäß einsetzenden Zusatzschmierung fort und überschreitet das Messsignal der dem Wälzlager zugeordneten Messeinrichtung einen für schadhafte Lager zulässigen Grenzwert, so gibt gemäß einer bevorzugten weiteren Ausgestaltung der Erfindung die Steuereinrichtung ein optisches oder akustisches Störsignal ab.

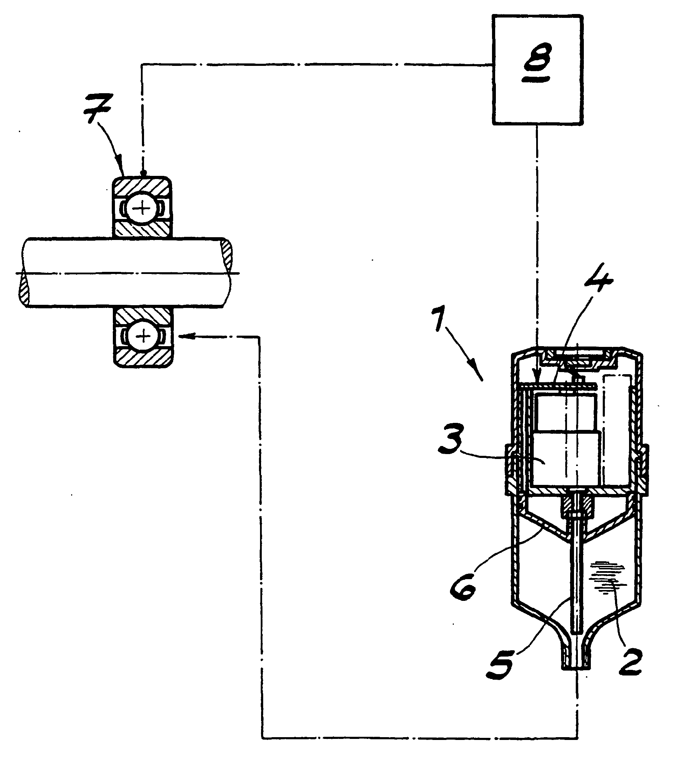

Im Folgenden wird die Erfindung anhand einer lediglich ein Ausführungsbeispiel darstellenden Zeichnung erläutert. Die einzige Figur zeigt schematisch eine Vorrichtung zur Schmierung eines Wälzlagers. Kernstück dieser Vorrichtung ist ein Schmierstoffgeber 1, der einen Schmierstoffbehälter mit Schmierstoffvorrat 2, eine Austragseinrichtung mit einem elektromotorischen Antrieb 3 und eine Steuereinrichtung 4 für den elektromotorischen Antrieb 3 aufweist. Im Ausführungsbeispiel besteht die Austragseinrichtung aus einer mit dem Antrieb 3 verbundenen Spindel 5 und einem von der Spindel 5 bewegbaren Kolben 6. Der Schmierstoffgeber 1 ist an die Schmierstelle eines Wälzlagers 7 angeschlossen. Die Steuereinrichtung 4, die in der Figur als Platine angedeutet ist, gibt in Intervallen Schaltimpulse an den elektromotorischen Antrieb 3 zur Abgabe kleiner Schmierstoffmengen ab. Üblicherweise sind die Spendezeitpunkte und Schmierintervalle, also die Dauer der Schmierstoffabgabe zu einem bestimmten Spendezeitpunkt, so festgelegt, dass der Schmierstoffvorrat über einen Zeitraum von mehreren Monaten abgegeben wird.

Die Vorrichtung weist ferner eine dem Wälzlager 7 zugeordnete Messeinrichtung 8 zur Erfassung des Lagerzustandes auf, die mit der Steuereinrichtung 4 des Schmierstoffgebers 1 verbunden ist. Als Messeinrichtung 8 eignet sich beispielsweise eine Temperaturmesseinrichtung am Wälzlager oder ein Stoßimpulsaufnehmer in Verbindung mit einem Sensor zur Messung der Wellendrehzahl. Wenn das Messsignal einen Vorgabewert, der für einen beginnenden Lagerschaden oder einen Mangelschmierungszustand charakteristisch ist, überschreitet, wird die Schmierstoffabgaberate durch Änderung der Spendezeitpunkte und/oder der Dauer der Spendeintervalle erhöht. Dazu ist die Steuereinrichtung 4 mit einem entsprechend programmierten Steuerchip ausgerüstet. Zusätzlich wird ein Signal zur Anzeige eines beginnenden Lagerdefektes abgegeben. Das Gehäuse des Schmierstoffgebers ist mit einer Anzeigeeinrichtung für das Signal, z. B. in Form einer farbigen Leuchtdiode (LED), ausgerüstet. Ferner kann die Steuereinrichtung 4 eine Schnittstelle für eine leitergebundene oder drahtlose Signalfernübertragung aufweisen.

## Patentansprüche

1. Vorrichtung zur Schmierung eines Wälzlagers bestehend aus
1.1) einem Schmierstoffgeber (1), der einen Schmierstoffbehälter mit Schmierstoffvorrat (2), eine Austragseinrichtung mit elektromotorischem Antrieb (3) sowie eine Steuereinrichtung (4) für den elektromotorischen Antrieb (3) aufweist und an die Schmierstelle eines Wälzlagers (7) angeschlossen ist und
1.2) einer dem Wälzlager (7) zugeordneten Messeinrichtung (8) zur Erfassung des Lagerzustandes, die mit der Steuereinrichtung (4) des Schmierstoffgebers verbunden ist,
wobei die Steuereinrichtung (4) des Schmierstoffgebers (1) in vorgegebenen Intervallen Schaltimpulse an den elektromotorischen Antrieb (3) zur Abgabe einer kleinen Schmierstoffmenge abgibt, wobei die Messeinrichtung (8) einen Stoßimpulsaufnehmer in Verbindung mit einem Sensor zur Messung der Wellendrehzahl aufweist und wobei die Steuereinrichtung (4) die Schmierstoffabgaberate durch Änderung der vorgegebenen Spendezeitpunkte oder der Dauer der Spendeintervalle selbsttätig verändert sowie ein Signal zur Abgabe eines beginnenden Lagerdefektes oder eines Mangelschmierungszustandes abgibt, wenn das von der Messeinrichtung (8) abgegebene Messsignal einen Vorgabewert überschreitet.

2. Vorrichtung nach Anspruch 1, **dadurch gekennzeichnet, dass** die Messeinrichtung (8) zusätzlich einen Temperatursensor aufweist.

3. Vorrichtung nach Anspruch 1 oder 2, **dadurch gekennzeichnet, dass** die Steuereinrichtung (4) Einstellmittel oder eine Schnittstelle für eine wälzlagerspezifische Konfiguration eines in der Steuereinrichtung gespeicherten Steuerprogramms aufweist, welches die Lagerstandsüberwachung und/oder die Festlegung der Spendezeitpunkte oder Spendeintervalle bei festgestelltem Wälzlagerdefekt bzw. festgestelltem Mangelschmierungszustand betrifft.

4. Vorrichtung nach einem der Ansprüche 1 bis 3, **dadurch gekennzeichnet, dass** der Schmierstoffgeber (1) ein Gehäuse aufweist, das mit einer Anzeigeeinrichtung für das einen Lagerdefekt anzeigende Signal ausgerüstet ist.

5. Vorrichtung nach Anspruch 4, **dadurch gekennzeichnet, dass** die Anzeigeeinrichtung aus mindestens einer farbigen Leuchtdiode (LED) besteht.

6. Vorrichtung nach einem der Ansprüche 1 bis 5, **dadurch gekennzeichnet, dass** die Steuereinrichtung (4) eine Schnittstelle für eine leitergebundene oder drahtlose Signalübertragung aufweist.

7. Vorrichtung nach einem der Ansprüche 1 bis 6, **dadurch gekennzeichnet, dass** die Steuereinrichtung (4) ein Störsignal abgibt, wenn das Messsignal der am Wälzlager (7) zugeordneten Messeinrichtung (8) einen für schadhafte Lager zulässigen Grenzwert überschreitet.

## Claims

1. Device for lubricating a roller bearing, consisting of
1.1) a lubricant dispenser (1) which has a lubricant container with a lubricant supply (2), a discharge device with an electric motor drive (3), and a control device (4) for the electric motor drive (3), and which is connected to the lubricating point of a roller bearing (7), and
1.2) a measuring device (8) assigned to the roller bearing (7) for detecting the bearing condition, which is connected to the control device (4) of the lubricant dispenser,
wherein the control device (4) of the lubricant dispenser (1) outputs switching pulses to the electric motor drive (3) at predefined intervals to discharge a small amount of lubricant, wherein the measuring device (8) has a shock pulse pick-up in conjunction with a sensor for measuring the rotational speed of the shaft, and wherein the control device (4) automatically changes the lubricant discharge rate by changing the predefined dispensing times or the duration of the dispensing intervals and outputs a signal for indicating the start of a bearing defect or a lubrication condition deficiency when the measurement signal output by the measuring device (8) exceeds a predefined value.

2. Device according to Claim 1, **characterized in that** the measuring device (8) additionally comprises a temperature sensor.

3. Device according to Claim 1 or 2, **characterized in that** the control device (4) comprises adjustment means or an interface for a roller-bearing-specific configuration of a control program stored in the control device, which control program deals with monitoring the bearing condition and/or defining the dispensing times or dispensing intervals when a roller bearing defect has been ascertained or when a lubrication condition deficiency has been ascertained.

4. Device according to any one of Claims 1 to 3, **characterized in that** the lubricant dispenser (1) comprises a housing which is equipped with a display device for the signal which indicates a bearing defect.

5. Device according to Claim 4, **characterized in that** the display device consists of at least one coloured light-emitting diode (LED).

6. Device according to any one of Claims 1 to 5, **characterized in that** the control device (4) comprises an interface for wired or wireless signal transmission.

7. Device according to any one of Claims 1 to 6, **characterized in that** the control device (4) outputs an interfering signal when the measurement signal of the measuring device (8) assigned to the roller bearing (7) exceeds a limit value permissible for damaged bearings.

## Revendications

1. Dispositif de lubrification d'un palier à roulement comprenant
1.1) un distributeur de lubrifiant (1), qui comporte un réservoir de lubrifiant avec une réserve de lubrifiant (2), un dispositif de décharge avec commande par moteur électrique (3), ainsi qu'un dispositif de commande (4) pour la commande par moteur électrique (3), et est raccordé au point de lubrification d'un palier à roulement (7), et
1.2) un dispositif de mesure (8) associé au palier à roulement (7) pour détecter l'état du palier, qui est relié au dispositif de commande (4) du distributeur de lubrifiant,
dans lequel le dispositif de commande (4) du distributeur de lubrifiant (1) transmet à intervalles prédéfinis des impulsions de commutation à la commande par moteur électrique (3) pour distribuer une petite quantité de lubrifiant, le dispositif de mesure (8) comporte un enregistreur d'impulsions de chocs relié à un capteur pour la mesure de la vitesse de rotation de l'arbre, et le dispositif de commande (4) modifie automatiquement le taux de distribution de lubrifiant par variation des instants de distribution prédéfinis ou de la durée des intervalles de distribution, ainsi qu'émet un signal d'un début de défaut de palier ou d'un état de manque de lubrification, lorsque le signal de mesure émis par le dispositif (8) dépasse une valeur de consigne.

2. Dispositif suivant la revendication 1, **caractérisé en ce que** le dispositif de mesure (8) comporte en outre un capteur de température.

3. Dispositif suivant l'une des revendications 1 et 2, **caractérisé en ce que** le dispositif de commande (4) comporte des moyens de réglage ou une interface pour une configuration, spécifique au palier à roulement, d'un programme mémorisé dans le dispositif de commande, qui concerne le contrôle de l'état du palier et/ou la définition des instants de distribution ou des intervalles de distribution en cas de défaut de palier à roulement constaté, respectivement en cas d'état de manque de lubrification constaté.

4. Dispositif suivant l'une des revendications 1 à 3, **caractérisé en ce que** le distributeur de lubrifiant (1) comporte un carter, qui est équipé d'un dispositif d'affichage pour le signal indiquant un défaut de palier.

5. Dispositif suivant la revendication 4, **caractérisé en ce que** le dispositif d'affichage est constitué d'au moins une diode électroluminescente (LED) en couleur.

6. Dispositif suivant l'une des revendications 1 à 5, **caractérisé en ce que** le dispositif de commande (4) comporte une interface pour une transmission de signaux guidée ou sans fils.

7. Dispositif suivant l'une des revendications 1 à 6, **caractérisé en ce que** le dispositif de commande (4) émet un signal de dérangement, lorsque le signal du dispositif de mesure (8) associé au palier à roulement (7) dépasse un seuil admissible pour des paliers défectueux.
